(19) **Europäisches Patentamt / European Patent Office / Office européen des brevets**

(11) **EP 3 079 501 B1**

(12) # EUROPEAN PATENT SPECIFICATION

(45) Date of publication and mention
of the grant of the patent:
**14.08.2019 Bulletin 2019/33**

(21) Application number: **14758932.9**

(22) Date of filing: **03.09.2014**

(51) Int Cl.:
**A23L 33/10** *(2016.01)*     **A23L 33/00** *(2016.01)*

(86) International application number:
**PCT/EP2014/068770**

(87) International publication number:
**WO 2015/086175 (18.06.2015 Gazette 2015/24)**

(54) **SYNTHETIC NUTRITIONAL COMPOSITIONS ESPECIALLY ADAPTED FOR MALE AND FEMALE INFANTS AND YOUNG CHILDREN**

SYNTHETISCHE, BESONDERS AUF MÄNNLICHE UND WEIBLICHE BABYS UND KLEINKINDER ABGESTIMMTE NAHRUNGSZUSAMMENSETZUNGEN

COMPOSITIONS NUTRITIONNELLES SYNTHÉTIQUES ADAPTÉES SPÉCIALEMENT AUX ENFANTS MÂLES ET FEMELLES ET JEUNES ENFANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2013 EP 13196799**

(43) Date of publication of application:
**19.10.2016 Bulletin 2016/42**

(73) Proprietor: **Société des Produits Nestlé S.A.**
**1800 Vevey (CH)**

(72) Inventors:
• **DESTAILLATS, Frederic**
**CH-1077 Servion (CH)**

• **THAKKAR, Sagar**
**CH-1806 St-Legier (CH)**

(74) Representative: **Corticchiato, Olivier et al**
**Société des Produits Nestlé S.A.**
**Avenue Nestlé 55**
**1800 Vevey (CH)**

(56) References cited:
**EP-A2- 0 887 023      WO-A1-2004/032651**
**WO-A1-2006/041316      WO-A1-2010/081604**
**WO-A2-2013/056038**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The invention concerns synthetic nutritional compositions for infants and young children up to the age of thirty-six months, particularly infant formulae and growing-up milks. The compositions vary according to the age and the sex of the infant or young child.

**Background of the Invention**

In general, human breast milk represents the uncontested gold standard in terms of infant nutrition. However, in some cases, breastfeeding is inadequate or unsuccessful for medical reasons or because of mother choice not to breastfeed. Infant formulae have been developed for these situations.

Infant formulae, follow-up formulae and grown-up milks which may be aimed at different age groups of 0 to 6 months, 6 months to 1 year and 1 year to 3 years respectively, are known. These infant formulae, follow-up formulae and growing-up milks aim to meet the requirements of infants and young children at the different ages. An age-tailored nutrition system for infants is described in WO 2009/068549, wherein a protein nature and content are adapted to specific age groups. The recommended World Health Organization (WHO) and Codex Alimentarius Commission guidelines for infant formulae and follow-up formulae state that the infant formulae and follow-up formulae shall not provide less than 60kcal /100mL and not more than 85 kcal/100mL.

Generally, conventional infant formulae and follow-up formulae tend to provide about 67kcal/100mL.

There is generally a tendency to overfeed infants and young children. Usually also, the infant formulae and/or follow-up formulae dosage and caloric density do not take into consideration the complementary food eaten by infants and young children when overfeeding the infants and young children. Also the starter formulas that target all children of 0-6 months do not distinguish the nutritional needs of infants aged 0-3 months from those aged 3 to 6 months old. It is known that breast milk composition changes considerably from the first to second and third month of lactation for example.

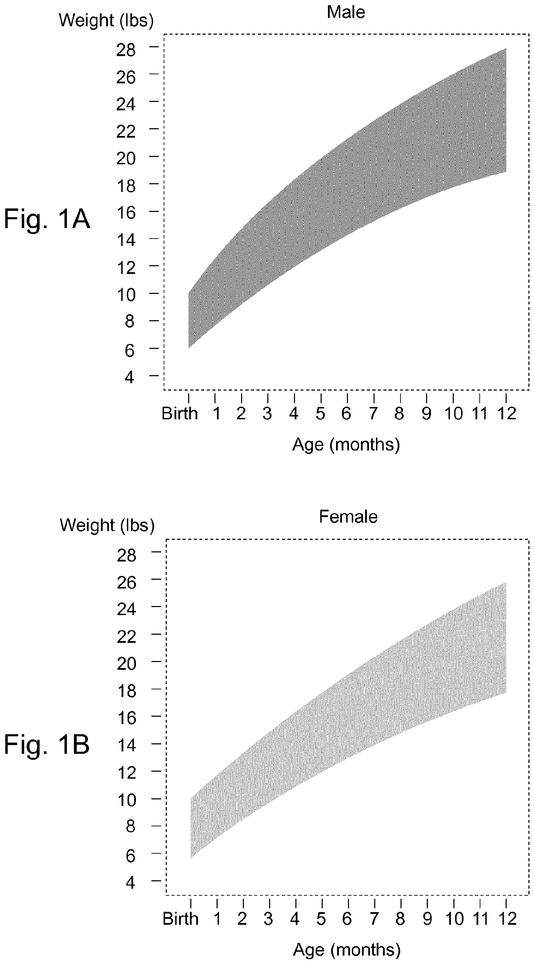

Furthermore, the dosage and caloric density of infant formulae and/or follow-up formulae do not take into consideration the sex of the child. Powe and associates [Powe C.E. et al. (2010); Infant sex predicts breast milk energy content, American journal of human biology, 22:50-54] have recently reported differences in energy content based on the gender of the new born infant. Milk secreted from the mothers of male infant was reported to be 25% greater in energy content when compared with the milk of mothers of female infants. This recent data is not surprising given that girls and boys have different physiological needs based upon the World Health Organization standard growth curves for boys and girls (see **Figure 1**). Thus, the tendency to overfeed infants and young children is even more accentuated for girls, because the dosage instructions and caloric density of current infant formulae and/or follow-up formulae of known infant formulae are the same for boys and girls.

It is known that a rapid growth of infants and young children increases a risk of obesity in later childhood or adulthood [Baird et al. (2005) Being big or growing fast: systematic review of size and growth in infancy and later obesity. B.M.J. 331(7522):929]. In the light of the data from Powe et al. one could postulate the risk of developing obesity is higher for girls. Infant formulas need to reduce the risk of obesity in later childhood or adulthood.

A number of studies indicate that nutrition in early postnatal life has an impact on long-term appetite regulation. For example, overfeeding rat pups results in altered appetite control with development of hyperphagia in adulthood of the rats [Davidowa, H., and Plagemann, A. (2004) Hypothalamic neurons of postnatally overfed, overweight rats respond differentially to corticotropin-releasing hormones. Neurosci Lett. Nov 16;371(1):64-8].

The following documents relate to human breast milk and nutritional compositions for infants and young children:

- WO2006041316A1, Fletcher K, Cathpole O., and Grey, J.B., Pritchard M., published 20 April 2006
- WO2004032651A1, Wyeth Corp, by Burgher A. M., Kaup S. M., Kuhlman C., published 22 April 2004
- EP0887023A2, S. P. Nestle SA, Lin, E., Behringer B., published on 30th December 1998
- WO2013056038A2, to Abbott Labs., Lamb C., Luebbers S., Tucker K., Johns P., Barrett-Reis B., published on 18th April 2013
- WO2010081604A1, Nestec SA, Mace, C., Aprikian, O. K., Pouteau E., published 22 July 2010

There is a need to provide a more balanced diet to infants and young children. This diet should take into account the gender of the infant or young child. It should also take into account the age of the child, specifically in months, for example 0-3, 3-6, 6-12 months etc. The diet should promote health benefits in the long term to the infants and young children.

There is a need to provide a nutritional system that enables the convenient, safe and accurate delivery of the most adequate nutrition all along the first months or years of the life of a baby.

There is need to provide a way to ensure that the best adequate individual nutritional solutions are made available to infants and their care-givers, in order to promote health benefits that may not be immediately visible but which consequences occur later in life.

There is a need to provide such cited nutritional compositions, especially during the first three years of life, that can help ensuring optimal growth and reduction of risk of health conditions later in life, such as cardiovascular diseases, diabetes, obesity, metabolic syndrome, or depressed immunity.

There is, thus, a need to provide a nutritional composition that acknowledges the gender and the specific age of the baby, while ensuring optimal growth and reduction of risk of health conditions later in life, such as cardiovascular diseases, diabetes, obesity, metabolic syndrome, or depressed immunity.

There is a need for an early-in-life nutritional intervention or control in order to deliver health benefits later-in-life.

To address these needs, the inventors have analyzed the milk from mothers to boys and from mothers to girls, at 30, 60 and 120 days post-partum in a longitudinal clinical study. Based on their results they have designed synthetic nutritional formulas that have distinct amounts of total solids and energy density for boys and girls.

## Summary of the Invention

The present invention concerns a set of synthetic nutritional formulations for infants and young children, meaning in the context of the invention, up to the age of 36 months. The compositions are especially adapted to the gender and the age of the child. Described are the administration of these compositions for promoting balanced growth and preventing obesity (not pertaining to the invention).

The first composition concerns a synthetic nutritional composition, especially adapted to the nutritional needs of a male infant or young child comprising:

  a. 68-78 kcal/100ml energy and
  b. 11.3-14.5 g/100ml total solids.

The second composition concerns a synthetic nutritional composition especially adapted to the nutritional needs of a female infant or young child and comprises

  a. 62-67 kcal/100ml energy and
  b. 10.9-13.4 g/100ml total solids.

The synthetic nutritional is an infant formula in the form of a powder, liquid or concentrated liquid, or is a human milk fortifier (not pertaining to the invention).

The invention concerns a set of at least two distinct synthetic nutritional compositions for infants or young children, wherein the first composition is especially adapted to the nutritional needs of a male infant or child, and the second composition is especially adapted to the nutritional needs of a female infant or child.

The first composition in the set of synthetic nutritional compositions for infants or young children may be especially adapted to the nutritional needs of a male infant of less than three months old or may be especially adapted to the nutritional needs of a male infant or young child more than three months old, and the second composition is especially adapted to the nutritional needs of a female infant or young child (not pertaining to the invention).

The first and second compositions of the set of compositions may be are conditioned separately or together in an outer container.

The compositions of the invention are designed to ensure balanced growth and prevent obesity in male and female infants or young children and later in life (not pertaining to the invention).

## Brief Description of the Figures

  **Figure 1** shows the average growth curves for boys (**Fig. 1A**) and for girls (**Fig. 1B**) as published by the World Health Organization [WHO. WHO child growth standards: length/height-for-age, weight-for-age, weight-for-length, weight-for height and body mass index-for-age: methods and development; 2006 (cited 2010 Mar 3). Available from: http://www.cdc.gov/growthcharts/who_charts.htm].

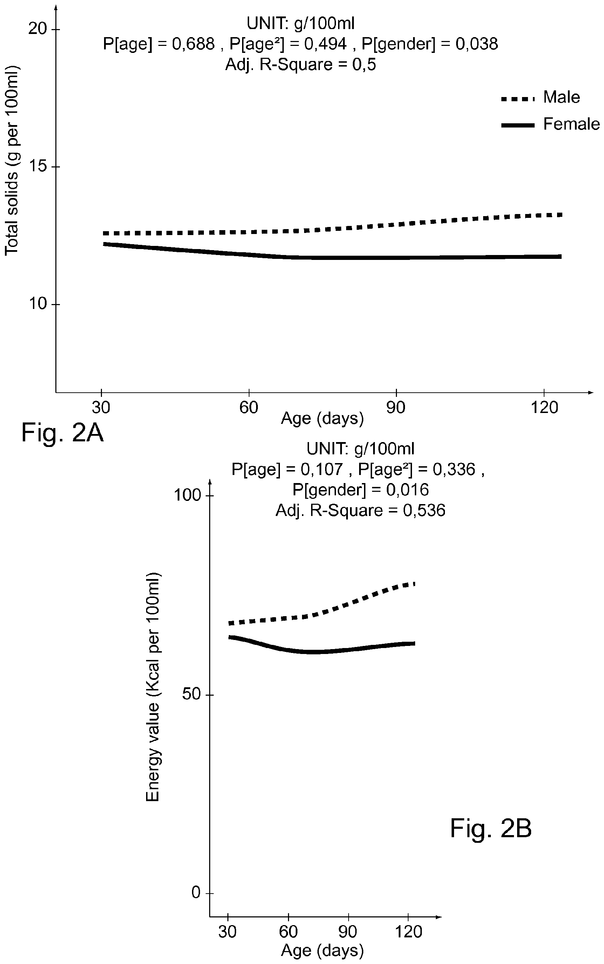

  **Figure 2** shows the results of the analysis of the breast milk of 50 mothers in trial detailed in Example 1. Samples were taken at 30, 60 and 120 days post-partum. Total solids (**Fig. 2A**) are measured in g/100ml. Energy (**Fig. 2B**) is measured in kcal/100ml. The measurements of milk of mothers to boys are shown with a dashed line, while the solid line shows the measurements of milk of mothers to girls. The P[gender] value relates to the differences in milk with respect to the sex of the baby. The P[age] values are differences in gender with respect to time; P[age] is a P value considering a linear model and P[age$^2$], using a quadratic model.

**Detailed Description**

For a complete understanding of the present invention and the advantages thereof, reference is made to the following detailed description of the invention.

It should be appreciated that various embodiments of the present invention can be combined with other embodiments of the invention and are merely illustrative of the specific ways to make and use the invention and do not limit the scope of the invention when taken into consideration with the claims and the following detailed description.

In the present description, the following words are given a definition that should be taken into account when reading and interpreting the description, examples and claims.

Definitions:

Infants: according to the Commission Directive 2006/141/EC of 22 December 2006 on infant formulae and follow-on formulae, article 1.2 (a), the term "infants" means children under the age of 12 months.

Young Children: according to the Commission Directives 2006/141/EC of 22 December 2006 and/or 91/321/EEC of 14 May 1991 on infant formulae and follow-on formulae, article 1.2 (b), the term "young children" means children aged between one and three years.

Infant formulae: according to the Commission Directives 2006/141/EC of 22 December 2006 and/or 91/321/EEC of 14 May 1991 on infant formulae and follow-on formulae, article 1.2 (c), the term "infant formulae" means foodstuffs intended for particular nutritional use by infants during the first four to six months of life and satisfying by themselves the nutritional requirements of this category of persons. It has to be understood that infants can be fed solely with infant formulas, or that the infant formula can be used by the carer as a complement of human milk. It is synonymous to the widely used expression "starter formula".

Follow-on formulae: according to the Commission Directives 2006/141/EC of 22 December 2006 and/or 91/321/EEC of 14 May 1991 on infant formulae and follow-on formulae, article 1.2 (d), the term "follow-on formulae" means foodstuffs intended for particular nutritional use by infants aged over four months and constituting the principal liquid element in a progressively diversified diet of this category of persons.

Growing-up milk: milk-based nutritional composition especially adapted to a child of between one year and three years old.

Human Milk fortifier: Nutritional composition for infants or young children intended to be added to or diluted with human milk.

The term "hypoallergenic composition" means a composition which is unlikely to cause allergic reactions.

The term "sialylated oligosaccharide" means an oligosaccharide having a sialic acid residue.

The term "fucosylated oligosaccharide" means an oligosaccharide having a fucose residue.

The term "prebiotic" means non-digestible carbohydrates that beneficially affect the host by selectively stimulating the growth and/or the activity of healthy bacteria such as bifidobacteria in the colon of humans [Gibson GR, Roberfroid MB. Dietary modulation of the human colonic microbiota: introducing the concept of prebiotics. J Nutr. 1995;125:1401-12].

The term "probiotic" means microbial cell preparations or components of microbial cells with a beneficial effect on the health or well-being of the host. [Salminen S, Ouwehand A. Benno Y. et al. "Probiotics: how should they be defined" Trends Food Sci. Technol. 1999:10 107-10].

All percentages are by weight unless otherwise stated.

As used in this specification, the words "comprises", "comprising", and similar words, are not to be interpreted in an exclusive or exhaustive sense. In other words, they are intended to mean "including, but not limited to".

Any reference to prior art documents in this specification is not to be considered an admission that such prior art is widely known or forms part of the common general knowledge in the field.

The present inventors have carried out a major study on breast milk composition. This study involved both developing advanced analytical technologies to analyze milk samples and performing a longitudinal clinical trial with human milk sampling at 30, 60 and 120 days post-partum (see **Example 1**). The milk samples were quantitatively analyzed for energy density and total solids. The inventors have surprisingly found very significant differences, between milk of mothers of male infants compared to that of female infants, not only in energy (differences are greater than previously reported). Furthermore this difference between male and female destined milk varied over time (between 0-120 days).

The results of this trial indicated surprisingly significant differences in the levels of total solids and energy density for boys and girls (see **Tables 1** and **2**, and **Figures 1** and **2**).

Based upon the results of this study, the inventors have designed compositions that are especially adapted to meet the nutritional needs of male and female infant and young children. To the inventor's knowledge, to date, no gender specific formulations for infants or young children are known.

The compositions according to the invention:

The invention relates to a set of at least 2 distinct synthetic nutritional compositions (first and second compositions).

The compositions of the invention are designed to meet the nutritional needs of male and female infants and young children. The compositions are designed to ensure balanced growth and prevent obesity in infants or young children (not pertaining to the invention).

The synthetic nutritional compositions of the invention are designed for consumption by children from birth to three years old. They are specifically designed to be gender specific. They are also age specific, being designed for infants younger than three months old, or older than three months, but less than 36 months.

The synthetic nutritional compositions of the invention may be an infant formula in the form of a powder, liquid or concentrated liquid (not pertaining to the invention). The infant formula may be based on a cow's milk, goat's milk or buffalo milk. The infant formula may be a starter formula for infants that are less than 6 months old or a follow-on formula for infants that are more than 6 months old. The composition of the invention may be a growing up milk, or a human milk fortifier. In a preferred embodiment, the composition may be cow's milk whey based infant formula. The formula may also be a hypoallergenic (HA) formula in which the cow milk proteins are (partially or extensively) hydrolysed. The formula may also be based on soy milk or a non-allergenic formula, for example one based on free amino acids.

Thus, the first composition according to one embodiment of the invention is especially adapted to the nutritional needs of a male infant or young boy (up to the age of 36 months), and comprises:

a. 68 to 78 kcal/100ml energy and
b. 11.3-14.5 g/100ml, preferably 12.5-13.2 g/100ml total solids.

The quantities expressed herein as g/100ml or kcal/100ml reflect the quantities present in the final liquid product, to be consumed by the infant or young child. For example, the composition may be a powdered infant formula that is diluted with water to give a final liquid product. The composition may also be a concentrated liquid that is diluted with water to achieve the final liquid product. The composition of the invention may be a liquid product that is directly consumed by the infant or child as is. The composition may be a human milk fortifier that is added to or diluted with human milk. In this case, the concentration of the nutrients already present in the human milk (to which the human milk fortifier is added) are to be taken as the average values for lactating mothers that are known or predicted from published clinical data.

The second synthetic nutritional composition is especially adapted to the nutritional needs of a female infant or young child and comprises:

a. 62-67 kcal/100ml energy and
b. 10.9-13.4 g/100ml, preferably 11.0-12.0 g/100ml total solids.

Based on the results of the clinical trial, detailed in **Example 1**, the inventors have surprisingly discovered that the differences between certain nutrients in breast milk for boys and girls vary significantly with time.

In the invention, there is provided a set of at least two distinct synthetic nutritional compositions. Each set comprises a first composition and second composition. The first composition is any of the compositions described above that are especially adapted to the nutritional needs of a male infant or child. The second composition is any of the compositions described above that is especially adapted to the nutritional needs of a female infant or child.

The first and second compositions are distinct in that they differ by at least 10% in the quantity of at least one of the common components in the two compositions chosen among a. or b..

The first and second compositions can be conditioned separately. The first and second compositions in the set are commercialized under the same marketing concept umbrella. The first and second compositions may be grouped together with another outer container, or packaging. The packaging may be for example simply a layer or plastic film.

The set may comprise additional third, fourth and fifth etc. compositions that are especially adapted to meet the nutritional needs of infants or young children that are for example, 3-6 months old 6-9 months old or 9-12 months old. The set may also contain additional compositions that target in the same way children older than one year up to three years old.

The set of the invention can preferably be commercialized under the same marketing concept (for example gender segmentation and/or specific adaptation of nutritional compositions for male and female infants or children).

The synthetic nutritional composition of the invention for male and/or the synthetic nutritional composition of the invention for female are specifically adapted for the specific needs of male and/or female infant. Such adaptation can comprise the total solid content and/or the energy density. In one embodiment the invention comprises a set of a synthetic nutritional composition of the invention for male and a synthetic nutritional composition of the invention for female that are specifically adapted for male and female infants in terms of energy density and/or total solids content, and/or lipid content (for each, quantitatively and/or qualitatively). Such adaptation preferably provides each of the male and female compositions the best adapted nutritional content for addressing specific needs or health conditions of males and females. Such health conditions can include the optimum growth (preferably), the optimum gut development, the optimal digestive function, the optimum immune functions or immune development, or the optimum neurological development for the male and female infants.

Other ingredients in the compositions:

Other standard ingredients known to the skilled person for formulating an infant formula, human milk fortifier or growing-up milk may also be present in the compositions of the invention.

The synthetic nutritional composition of the invention for male and the synthetic nutritional composition of the invention for female may comprise same or similar ingredients, such as oligosaccharides, lipids, prebiotics or probiotics (for example as indicated below). Preferably however such ingredients may be different and particularly selected and adapted for the male and the female compositions. Preferably the dosage of each ingredient is adapted for the male and female compositions. Such adaptation preferably provides each of the male and female compositions the best adapted nutritional content for addressing specific needs or health conditions of males and females. Such health conditions can include the optimum growth, the optimum gut development, the optimal digestive function, the optimum immune functions or immune development, or the optimum neurological development for the male and female infants.

The nutritional compositions of the invention may contain essential fatty acids, specifically linoleic acid (LA), $\alpha$-linolenic acid (ALA) and polyunsaturated fatty acids (PUFAs). The nutritional compositions of the invention may further contain gangliosides monosialoganglioside-3 (GM3) and disialogangliosides 3 (GD3), phospholipids such as sphingomyelin, phospholipids phosphatidylcholine, phosphatidylethanolamine, phosphatidylinositol and phosphatidylserine.

Prebiotics:

The prebiotics that may be used in accordance with the present invention are not particularly limited and include all food substances that promote the growth of probiotics or health beneficial micro-organisms in the intestines. Preferably, they may be selected from the group consisting of oligosaccharides, optionally containing fructose, galactose, mannose; dietary fibers, in particular soluble fibers, soy fibers; inulin; or mixtures thereof. Preferred prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), oligosaccharides of soy, glycosylsucrose (GS), lactosucrose (LS), lactulose (LA), palatinose-oligosaccharides (PAO), malto-oligosaccharides, gums and/or hydrolysates thereof, pectins and/or hydrolysates thereof.

In particular, the human milk oligosaccharides, for example sialylated oligosaccharides, described in WO 2012/069416 published on May 31, 2012 may be included in the composition according to the invention. The latter oligosaccharides may act in synergy with the essential fatty acids and phospholipids of the invention to promote the healthy establishment of cognitive function in the young developing infant or young child.

Probiotic may be added to the composition. All probiotic micro-organisms may be added additionally. Preferably, the probiotic may be selected for this purpose from the group consisting of *Bifidobacterium, Lactobacillus, Lactococcus, Enterococcus, Streptococcus, Kluyveromyces, Saccharoymces, Candida,* in particular selected from the group consisting of *Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii* or mixtures thereof, preferably selected from the group consisting of *Bifidobacterium longum* NCC3001 (ATCC BAA-999), *Bifidobacterium longum* NCC2705 (CNCM I-2618), *Bifidobacterium longum* NCC490 (CNCM I-2170), *Bifidobacterium lactis* NCC2818 (CNCM I-3446), *Bifidobacterium breve* strain A, *Lactobacillus paracasei* NCC2461 (CNCM I-2116), *Lactobacillus johnsonii* NCC533 (CNCM I-1225), *Lactobacillus rhamnosus GG* (ATCC53103), *Lactobacillus rhamnosus* NCC4007 (CGMCC 1.3724), *Enterococcus faecium SF 68* (NCC2768; NCIMB10415), and mixtures thereof.

In one embodiment the synthetic nutritional compositions of the invention comprise probiotics active or inactivated, dead or alive, preferably in sufficient dose to be effective (e.g between $10^6$ to $10^{11}$ or between $10^7$ and $10^9$ cfu /g of composition). In one embodiment the composition of the invention for male infant comprises a probiotic having a specific effect for male infant and is different from the probiotic comprised in the composition of the invention for female infant. In one embodiment such probiotics comprise Lactobacillus lactis or Lactobacillus rhamnosus GG for male and B. Longum for female (or possibly vice-versa). In one embodiment such probiotics comprise Bifidobacterium Lactis for male and Lactobacillus Rhamnosus for female (or possibly vice-versa). The choice of probiotics is specifically adapted for the particular needs of male and female infants.

Vitamins, minerals and other micronutrients suitable for administration to children under the age of three may be added to the compositions of the invention.

The compositions of the invention promote the balanced development and prevent obesity later in life: (not pertaining to the invention)

The compositions are especially adapted to promote the balanced growth and prevent obesity in infants and young children. The indicators of normative growth are defined by World Health Organization (WHO) [Acta Paediatrica, 2006; Suppl 450: 76-85]. These indicators are: length/height-for-age, weight-for-age (see **Figure 1**), weight-for-length, weight-for-height, body mass, index-for-age (BMI-for-age), head circumference-for-age, arm circumference-for-age, subscapular skinfold-for-age, triceps skinfold-for-age, motor development milestones, weight velocity, length velocity and head circumference velocity. Furthermore, each indicator is available independently for male and female gender of the infant. The value of any particular indicator of an infant between 3rd and 97th percentile at a corresponding time point is considered normal and/or optimal.

In one embodiment of the invention, the synthetic nutritional composition of the invention is an infant formula (or a follow-on formula or a growing up milk or a human milk fortifier), for infant of less than 36 months, less than 24 months, less than 12 months, less than 6 months or preferably of 3 months or less. It is generally known, or at least hypothized, that early nutritional interventions can be more effective (in comparison to intervention at later stages in life) in programming the metabolic pathways of the infants to induce optimal balanced growth and thus prevent obesity during infancy and later in life.

The synthetic nutritional composition of the invention may be an infant formula intended and/or especially designed for preterm infants and/or caesarean-born infants. It is generally known, or at least hypothized, that these subject groups are more prone to suffer from unbalanced growth (and, thus, from being obese later in life) due to the immaturity of their metabolic pathways and physiological conditions at birth (not pertaining to the invention). Early adaptation and control of the diet is therefore of the highest importance.

The synthetic nutritional composition of the invention may be an infant formula (or a follow-on formula or a growing up milk or a human milk fortifier), for infants born from mothers or parents having a history of obesity or overweight (not pertaining to the invention). It is generally known, or at least hypothized, that these subjects groups are more prone to suffer from unbalanced growth (and, thus, from being obese later in life), due, for example, to genetic or epi-genetic predispositions. It is, therefore, critical to address such issues as early as possible during infancy by a specifically adapted diet.

The invention is further described with reference to the following examples.

**Examples:**

Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

**Example 1**

Longitudinal clinical trial:

The present inventors designed a longitudinal clinical trial with 50 lactating mothers with milk sampling at 30 (visit 1), 60 (visit 2) and 120 (visit 3) days post-partum. The milk samples were quantitatively analyzed for energy and total solids.

Human milk collection: The protocol and collection of human milk was reviewed and approved by the local ethical committee of Singapore. The study took place at National University of Singapore. Volunteer mothers of term infants, who were apparently healthy and non-smokers (n = 50; 31.1 $\pm$ 3.1-year old) provided breast milk samples (approximately 30 mL; 4 weeks post-partum). Samples were collected after full expression from one breast using milk pump and while the baby was fed on the other breast. All efforts were made to collect complete feed that included fore-milk, mid-milk and hind-milk as a representation of one feed and to avoid within feed variation of lipid content. Approximately 30 mL aliquot was separated in a conical polypropylene tube for this study and the rest was fed to the infant. Samples collected for research were stored at -80°C until analyses.

Total solids and energy density analysis by mid-infrared (MIR) Assay: The MIR analyses were performed with the Human Milk Analyzer (HMA, Miris, Sweden). The HMA is based on a semisolid MIR transmission spectroscopy, designed specifically for determination of the macronutrient composition of human milk. The use of the machine was according to manufacturer's instructions. Briefly 1 mL of previously warmed sample (up to 40 °C in water bath) was sonicated for 1 min before manual injection to the milk inlet. The analysis was conducted within next minute before the milk was retrieved and the inlet washed with de-ionized water. The cell was also washed with supplied detergent every 5 sample injections. Also every 10 samples an in-house control as well as calibrating standard provided by Miris were ran for quality control purposes.

Results are shown in **Table 1** (Total Solids) and **Table 2** (Energy density) and graphically in **Figures 2A** and **2B** for total solids and Energy density respectively.

**Table 1** below shows the results for total solids.

| Visit | Milk secreted for baby boys | | | | |
|-------|-----|------|------|-----|------|
|       | N   | Min  | Mean | SD  | max  |
| V1    | 25  | 7.7  | 12.5 | 1.7 | 15.4 |
| V2    | 25  | 8.2  | 12.8 | 2.8 | 21.1 |
| V3    | 25  | 7.5  | 13.2 | 2.8 | 19.6 |
| Visit | Milk secreted for baby girls | | | | |
|       | N   | Min  | Mean | SD  | max  |
| V1    | 25  | 8.1  | 12.1 | 1.2 | 13.6 |
| V2    | 25  | 7.6  | 11.9 | 1.8 | 14.5 |
| V3    | 24  | 8.0  | 11.7 | 2.2 | 16.6 |

Table 1: Longitudinal evolution of total solids in g per 100 mL of human milk secreted for baby boys and baby girls

**Table 2** shows the results for energy kcal/100ml.

| Energy value (Kcal per 100 ml) | Milk secreted for baby boys | | | |
|-------------------------------|-------|-------|-------|--------|
|                               | Min   | Mean  | SD    | max    |
| **V1**                        | 49.00 | 67.80 | 10.41 | 88.00  |
| **V2**                        | 37.00 | 69.90 | 23.25 | 140.00 |
| **V3**                        | 42.50 | 77.56 | 21.04 | 128.00 |
| Energy value (Kcal per 100 ml) | Milk secreted for baby girls | | | |
|                               | Min   | Mean  | SD    | max    |
| **V1**                        | 41.00 | 64.04 | 8.12  | 75.00  |

(continued)

| Energy value (Kcal per 100 ml) | Milk secreted for baby girls | | | |
|---|---|---|---|---|
| | Min | Mean | SD | max |
| V2 | 28.00 | 62.08 | 14.47 | 82.00 |
| V3 | 1.00 | 62.62 | 20.71 | 102.00 |
| Energy value (Kcal per 100 ml) | Combined | | | |
| | Min | Mean | SD | Max |
| V1 | 41.00 | 65.92 | 9.43 | 88.00 |
| V2 | 28.00 | 65.99 | 19.57 | 140.00 |
| V3 | 1.00 | 70.24 | 21.99 | 128.00 |

**Table 2:** Longitudinal evolution of energy value in kcal per 100 mL of human milk secreted for baby boys and baby girls

<u>Statistical analysis:</u>

Data collection points are 1, 2 and 4 months after infants' birth. Tables 1 and 2 show the Min, Mean, SD and Max for each unit of measurement. Statistical models fitted to the raw data are shown in Figure 2. Longitudinal analysis was carried out using linear mixed models. The figures also show the sequential effect of each of the terms age, $age^2$, gender and age-gender interactions in this particular order in terms of the P-value for the corresponding F-test. Thus, the P[age] is a P value considering a linear model and P[$age^2$] corresponds to a quadratic one. If appropriate model is chosen according to the whether the trajectory is linear (P[age]) or curved (P[$age^2$]).

Adjusted R-squares were computed to obtain the degree of variability that is explained by the statistical models used.

Analysis was carried out using the following mixed-effects linear model:

$$Conc: = Age + Age^2 + Gender + Age \_ Gender + (Age^2) \_ Gender + Random\ Effects:$$

Random effects are subject specific terms to model the underlying correlation between repeat measures.

**Example 2** (not part of the invention)

An example of a starter infant formula for infant boys up to the age of three months is given below. The protein source is a conventional mix of whey protein and casein.

| Nutrient | per 100kcal | per litre |
|---|---|---|
| Energy (kcal) | 100 | 678.0 |
| Protein (g) | 1.68 | 11.3 |
| Fat (g) | 6.38 | 43.64 |
| Linoleic acid (g) | 0.98 | 6.7 |
| $\alpha$-Linolenic acid (mg) | 70 | 471 |
| Lactose (g) | 9.41 | 62.6 |
| Minerals (g) | 0.37 | 2.5 |
| Na (mg) | 23 | 150 |
| K (mg) | 89 | 590 |
| Cl (mg) | 64 | 430 |

(continued)

| Nutrient | per 100kcal | per litre |
|---|---|---|
| Ca (mg) | 62 | 410 |
| P (mg) | 31 | 210 |
| Mg (mg) | 7 | 50 |
| Mn (μg) | 8 | 50 |
| Se (μg) | 2 | 13 |
| Vitamin A (μg RE) | 105 | 700 |
| Vitamin D (μg) | 1.5 | 10 |
| Vitamin E (mg TE) | 0.8 | 5.4 |
| Vitamin K1 (μg) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid (μg) | 9 | 60 |
| Pantothenic acid (mg) | 0.45 | 3 |
| Vitamin B12 (μg) | 0.3 | 2 |
| Biotin (μg) | 2.2 | 15 |
| Choline (mg) | 10 | 67 |
| Fe (mg) | 1.2 | 8 |
| I (μg) | 15 | 100 |
| Cu (mg) | 0.06 | 0.4 |
| Zn (mg) | 0.75 | 5 |
| GM3 (mg) | 0.32 | 2.2 |
| GD3 (mg) | 0.34 | 2.3 |
| Sphingomyelin (mg) | 13.16 | 88.6 |
| Phosphatidylcholine (mg) | 9.12 | 61.2 |
| Phosphatidylethanolamine (mg) | 10.51 | 70.5 |
| Phosphatidylinositol (mg) | 1.75 | 11.5 |
| Phosphatidylserine (mg) | 1.3 | 8.5 |

**Example 3**

An example of a starter infant formula for infant boys older than three months is given below. The protein source is a conventional mix of whey protein and casein.

| Nutrient | per 100kcal | per litre |
|---|---|---|
| Energy (kcal) | 100 | 775.64 |
| Protein (g) | 1.18 | 8.48 |

(continued)

| Nutrient | per 100kcal | per litre |
|---|---|---|
| Fat (g) | 6.73 | 53.88 |
| Linoleic acid (g) | 0.92 | 7.31 |
| α-Linolenic acid (mg) | 60 | 452.9 |
| Lactose (g) | 8.64 | 63.56 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn (μg) | 8 | 50 |
| Se (μg) | 2 | 13 |
| Vitamin A (μg RE) | 105 | 700 |
| Vitamin D (μg) | 1.5 | 10 |
| Vitamin E (mg TE) | 0.8 | 5.4 |
| Vitamin K1 (μg) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid (μg) | 9 | 60 |
| Pantothenic acid (mg) | 0.45 | 3 |
| Vitamin B12 (μg) | 0.3 | 2 |
| Biotin (μg) | 2.2 | 15 |
| Choline (mg) | 10 | 67 |
| Fe (mg) | 1.2 | 8 |
| I (μg) | 15 | 100 |
| Cu (mg) | 0.06 | 0.4 |
| Zn (mg) | 0.75 | 5 |
| GM3 (mg) | 0.56 | 4.3 |
| GD3 (mg) | 0.3 | 2 |
| Sphingomyelin (mg) | | |
| Phosphatidylcholine (mg) | 7.07 | 53.2 |
| Phosphatidylethanolamine (mg) | 11.83 | 88.5 |
| Phosphatidylinositol (mg) | 2.4 | 18.1 |
| Phosphatidylserine (mg) | 1.28 | 9.4 |

**Example 4:**

An example of the composition of a starter infant formula for infant girls according to the present invention is given below. This composition is given by way of illustration only. The protein source is a conventional mix of whey protein and casein.

| Nutrient | per 100kcal | per litre |
|---|---|---|
| Energy (kcal) | 100 | 633.3 |
| Protein (g) | 1.53 | 9.42 |
| Fat (g) | 6.03 | 39.3 |
| Linoleic acid (g) | 0.77 | 4.94 |
| α-Linolenic acid (mg) | 50 | 318.8 |
| Lactose (g) | 10.165 | 64.13 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn (μg) | 8 | 50 |
| Se (μg) | 2 | 13 |
| Vitamin A (μg RE) | 105 | 700 |
| Vitamin D (μg) | 1.5 | 10 |
| Vitamin E (mg TE) | 0.8 | 5.4 |
| Vitamin K1 (μg) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid (μg) | 9 | 60 |
| Pantothenic acid (mg) | 0.45 | 3 |
| Vitamin B12 (μg) | 0.3 | 2 |
| Biotin (μg) | 2.2 | 15 |
| Choline (mg) | 10 | 67 |
| Fe (mg) | 1.2 | 8 |
| I (μg) | 15 | 100 |
| Cu (mg) | 0.06 | 0.4 |
| Zn (mg) | 0.75 | 5 |
| GM3 (mg) | 0.47 | 3 |
| GD3 (mg) | 0.29 | 1.8 |

(continued)

| Nutrient | per 100kcal | per litre |
|---|---|---|
| Sphingomyelin (mg) | 12.32 | 79.8 |
| Phosphatidylcholine (mg) | 7.92 | 51.65 |
| Phosphatidylethanolamine (mg) | 10.42 | 68.55 |
| Phosphatidylinositol (mg) | 1.93 | 12.5 |
| Phosphatidylserine (mg) | 1.175 | 7.6 |
| Fe (mg) | 1.2 | 8 |
| I ($\mu$g) | 15 | 100 |
| Cu (mg) | 0.06 | 0.4 |
| Zn (mg) | 0.75 | 5 |
| GM3 (mg) | 0.47 | 3 |
| GD3 (mg) | 0.29 | 1.8 |
| Sphingomyelin (mg) | 12.32 | 79.8 |
| Phosphatidylcholine (mg) | 7.92 | 51.65 |
| Phosphatidylethanolamine (mg) | 10.42 | 68.55 |
| Phosphatidylinositol (mg) | 1.93 | 12.5 |
| Phosphatidylserine (mg) | 1.175 | 7.6 |

**Claims**

1. A set of at least two distinct synthetic nutritional compositions for infants or young children, wherein the first composition is especially adapted to the nutritional needs of a male infant or young child up to the age of 36 months and comprises 68-78 kcal/100ml energy and 11.3-14.5 g/100ml total solids, and wherein the second composition is especially adapted to the nutritional needs of a female infant or young child, and comprises 62-67 kcal/100ml energy and 10.9-13.4 g/100ml total solids, wherein the quantities expressed as for both first and second compositions as g/100ml or kcal/100ml reflect the quantities present in the final liquid product to be consumer by the infant or young child.

**Patentansprüche**

1. Satz von mindestens zwei verschiedenen synthetischen Nährstoffzusammensetzungen für Säuglinge oder Kleinkinder, wobei die erste Zusammensetzung insbesondere an den Nährstoffbedarf eines männlichen Säuglings oder Kleinkinds bis zum Alter von 36 Monaten angepasst ist und 68-78 kcal/100 ml Energie und 11,3-14,5 g/100 ml Gesamtfeststoffe umfasst, und wobei die zweite Zusammensetzung insbesondere an den Nährstoffbedarf eines weiblichen Säuglings oder Kleinkinds angepasst ist und 62-67 kcal/100 ml Energie und 10,9-13,4 g/100 ml Gesamtfeststoffe umfasst, wobei die Mengen, für sowohl die erste als auch die zweite Zusammensetzung in g/100 ml oder kcal/100 ml ausgedrückt, die Mengen widerspiegeln, die im fertigen flüssigen Produkt, das von dem Säugling oder Kleinkind verbraucht wird, vorhanden sind.

**Revendications**

1. Ensemble d'au moins deux compositions nutritionnelles synthétiques distinctes pour nourrissons ou jeunes enfants, dans lequel la première composition est spécialement conçue pour les besoins nutritionnels d'un nourrisson ou jeune enfant garçon jusqu'à l'âge de 36 mois et comprend 68 à 78 kcal/100 mL d'énergie et 11,3 à 14,5 g/100 mL de solides totaux,

et dans lequel la deuxième composition est spécialement conçue pour les besoins nutritionnels d'un nourrisson ou jeune enfant fille, et comprend 62 à 67 kcal/100 mL d'énergie et 10,9 - 13,4 g/100 mL de solides totaux,

dans lequel les quantités exprimées concernant à la fois les première et deuxième compositions en tant que g/100 mL ou kcal/100 mL reflètent les quantités présentes dans le produit liquide final destiné à être consommé par le nourrisson ou jeune enfant.

Fig. 1A

Fig. 1B

UNIT: g/100ml
P[age] = 0,688 , P[age²] = 0,494 , P[gender] = 0,038
Adj. R-Square = 0,5

Fig. 2A

UNIT: g/100ml
P[age] = 0,107 , P[age²] = 0,336 ,
P[gender] = 0,016
Adj. R-Square = 0,536

Fig. 2B

## REFERENCES CITED IN THE DESCRIPTION

### Patent documents cited in the description

- WO 2009068549 A
- WO 2006041316 A1, Fletcher K, Cathpole O., and Grey, J.B., Pritchard M.
- WO 2004032651 A1
- EP 0887023 A2, S. P. Nestle SA, Lin, E., Behringer B.
- WO 2013056038 A2, Abbott Labs., Lamb C., Luebbers S., Tucker K., Johns P., Barrett-Reis B.
- WO 2010081604 A1, Nestec SA, Mace, C., Aprikian, O. K., Pouteau E.
- WO 2012069416 A

### Non-patent literature cited in the description

- **POWE C.E. et al.** Infant sex predicts breast milk energy content. *American journal of human biology,* 2010, vol. 22, 50-54
- **BAIRD et al.** Being big or growing fast: systematic review of size and growth in infancy and later obesity. *B.M.J.,* 2005, vol. 331 (7522), 929
- **DAVIDOWA, H. ; PLAGEMANN, A.** Hypothalamic neurons of postnatally overfed, overweight rats respond differentially to corticotropin-releasing hormones. *Neurosci Lett.,* 16 November 2004, vol. 371 (1), 64-8
- **GIBSON GR ; ROBERFROID MB.** Dietary modulation of the human colonic microbiota: introducing the concept of prebiotics. *J Nutr.,* 1995, vol. 125, 1401-12
- **SALMINEN S ; OUWEHAND A. ; BENNO Y. et al.** Probiotics: how should they be defined. *Trends Food Sci. Technol.,* 1999, vol. 10, 107-10
- *Acta Paediatrica,* 2006, vol. 450, 76-85